# EUROPEAN PATENT APPLICATION

(11) **EP 4 596 356 A1**
(43) Date of publication of application: **06.08.2025**
(21) Application number: 23768615.9
(22) Date of filing: 11.08.2023
(51) Int. Cl.: B60W 50/14, B60W 30/18, B62J 50/21

(54) **CONTROL DEVICE AND CONTROL METHOD**

(30) Priority: 30.09.2022 JP 2022157202
(71) Applicant: Robert Bosch GmbH, 70442 Stuttgart (DE)
(72) Inventor: PFAU, Lars, Yokohama-shi, Kanagawa 224-8501 (JP); BAIN, Simeon, Clayton, Victoria 3168 (AU)
(74) Representative: Isarpatent
(86) International application number: PCT/IB2023/058125
(87) International publication number: WO 2024/069267

(57) **Abstract**

The invention obtains a controller and a control method capable of improving safety of a straddle-type vehicle.

In a controller (20) and a control method according to the invention, an acquisition section of the controller (20) acquires positional relationship information between a straddle-type vehicle (1) and a rear vehicle (2) that is a vehicle located behind the straddle-type vehicle (1), and an execution section of the controller (20) executes rider-assistance operation to assist with driving by a rider. The execution section executes lane change notification operation on the basis of the positional relationship information, the lane change notification operation being the rider-assistance operation to notify the rider of an instruction on a lane change.

## Description

### Technical Field

The present invention relates to a controller and a control method capable of improving safety of a straddle-type vehicle.

### Background Art

Conventionally, various techniques for assisting with driving by a rider of a straddle-type vehicle such as a motorcycle have been proposed. For example, a driver-assistance system is disclosed in PTL 1. The driver-assistance system warns the rider of the motorcycle that the motorcycle inappropriately approaches an obstacle on the basis of information detected by a sensor device that detects the obstacle present in a travel direction or substantially in the travel direction.

### Citation List

### Patent Literature

PTL 1: JP2009-116882A

### Summary of Invention

### Technical Problem

As a technique of assisting with driving by the rider, there is a technique of providing the rider with notification that corresponds to a traffic condition around a straddle-type vehicle. Here, it is difficult for the rider of the straddle-type vehicle to check a traffic situation behind the straddle-type vehicle. Thus, there is a strong need to improve safety by appropriately providing the notification that corresponds to the traffic condition around the straddle-type vehicle. In addition, since the straddle-type vehicle is smaller than a four-wheeled automobile and the like, there is the strong need to improve the safety.

The invention has been made with the above-described problem as the background and therefore obtains a controller and a control method capable of improving safety of a straddle-type vehicle.

### Solution to Problem

A controller according to the invention is a controller for a rider-assistance system that assists with driving by a rider of a straddle-type vehicle, and includes: an acquisition section that acquires positional relationship information between the straddle-type vehicle and a rear vehicle that is a vehicle located behind the straddle-type vehicle; and an execution section that executes rider-assistance operation to assist with driving by the rider. The execution section executes lane change notification operation on the basis of the positional relationship information, and the lane change notification operation is the rider-assistance operation to notify the rider of an instruction on a lane change.

A control method according to the invention is a control method for a rider-assistance system that assists with driving by a rider of a straddle-type vehicle, and includes: acquiring positional relationship information between the straddle-type vehicle and a rear vehicle that is a vehicle located behind the straddle-type vehicle by an acquisition section of a controller; and executing rider-assistance operation to assist with driving by the rider by an execution section of the controller. The execution section executes lane change notification operation on the basis of the positional relationship information, and the lane change notification operation is the rider-assistance operation to notify the rider of an instruction on a lane change.

### Advantageous Effects of Invention

In the controller and the control method according to the invention, the acquisition section of the controller acquires the positional relationship information between the straddle-type vehicle and the rear vehicle that is the vehicle located behind the straddle-type vehicle, and the execution section of the controller executes the rider-assistance operation to assist with driving by the rider. The execution section executes the lane change notification operation on the basis of the positional relationship information, and the lane change notification operation is the rider-assistance operation to notify the rider of the instruction on the lane change. In this way, it is possible to appropriately instruct the rider on the lane change according to a traffic condition behind the straddle-type vehicle. Therefore, it is possible to improve safety of the straddle-type vehicle.

### Brief Description of Drawings

Fig. 1 is a schematic view illustrating an outline configuration of a straddle-type vehicle according to an embodiment of the invention.
Fig. 2 is a block diagram illustrating an exemplary functional configuration of a controller according to the embodiment of the invention.
Fig. 3 is a view illustrating a situation where a rear vehicle as a vehicle that is located behind the straddle-type vehicle according to the embodiment of the invention is detected.
Fig. 4 is a flowchart illustrating an example of a processing procedure that is executed by the controller according to the embodiment of the invention.

### Description of Embodiments

A description will hereinafter be made on a controller and a control method according to the invention with reference to the drawings.

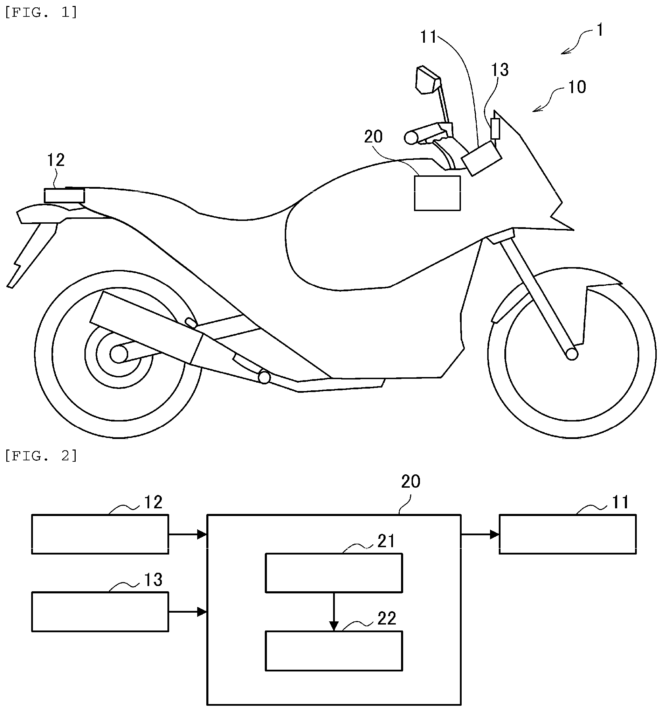

Hereinafter, a description will be made on a controller that is used for a two-wheeled motorcycle (see a straddle-type vehicle 1 in Fig. 1). However, a vehicle as a control target of the controller according to the invention may be a straddle-type vehicle other than the two-wheeled motorcycle. The straddle-type vehicle means a vehicle that a rider straddles. Examples of the straddle-type vehicle are motorcycles (a two-wheeled motor vehicle and a three-wheeled motor vehicle) and a bicycle. The motorcycles include a vehicle having an engine as a power source, a vehicle having an electric motor as the power source, and the like. Examples of the motorcycles are a motorbike, a scooter, and an electric scooter. The bicycle means a vehicle capable of traveling forward on a road by a depression force applied to pedals by the rider. Examples of the bicycle are a normal bicycle, an electrically-assisted bicycle, and an electric bicycle.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Straddle-Type Vehicle>

A description will be made on a configuration of the straddle-type vehicle 1 according to the embodiment of the invention with reference to Fig. 1 and Fig. 2.

Fig. 1 is a schematic view illustrating an outline configuration of the straddle-type vehicle **1.** The straddle-type vehicle 1 is a two-wheeled motorcycle that corresponds to an example of the straddle-type vehicle according to the invention. As illustrated in Fig. 1, the straddle-type vehicle 1 includes a display device 11, a surrounding environment sensor 12, a navigation system 13, and a controller (ECU) 20.

The straddle-type vehicle 1 includes a rider-assistance system 10 that assists with driving by a rider of the straddle-type vehicle **1.** The rider-assistance system 10 includes the above components (that is, the display device 11, the surrounding environment sensor 12, the navigation system 13, and the controller 20).

The display device 11 has a display function to visually display information. Examples of the display device 11 are a liquid-crystal display and a lamp. Arrangement of the display device 11 in relation to a vehicle body is not particularly limited. For example, the display device 11 may be provided in front of a handlebar in the straddle-type vehicle 1 or may be provided near a mirror of the straddle-type vehicle 1.

The surrounding environment sensor 12 detects surrounding environment information on environment around the straddle-type vehicle 1. More specifically, the surrounding environment sensor 12 is provided to a rear portion of the straddle-type vehicle 1, and detects the surrounding environment information behind the straddle-type vehicle 1. The surrounding environment information that is detected by the surrounding environment sensor 12 is output to the controller 20.

The surrounding environment information that is detected by the surrounding environment sensor 12 may be information related to a distance to or an orientation (for example, a relative location, a relative distance, a relative speed, relative acceleration, or the like) of a target object that is located around the straddle-type vehicle **1,** or may be a characteristic (for example, a type of the target object, a shape of the target object itself, a mark on the target object, or the like) of the target object that is located around the straddle-type vehicle 1. Examples of the surrounding environment sensor 12 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The navigation system 13 is a system that guides the rider along a route from a current location of the straddle-type vehicle 1 to a destination desired by the rider. The navigation system 13 displays various types of information on route guidance (for example, the current location of the straddle-type vehicle 1, a travel route as a guidance target, a location of the destination, a distance on the travel route from the current location of the straddle-type vehicle 1 to the destination, a time required to arrive at the destination, and the like). In addition, the navigation system 13 can acquire location information of the straddle-type vehicle 1 on the basis of information that is sent from the Global Positioning System (GPS) satellite. Furthermore, the navigation system 13 can acquire information on a road on which the straddle-type vehicle 1 currently travels on the basis of map information and the like.

The controller 20 controls the rider-assistance system 10. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

Fig. 2 is a block diagram illustrating an exemplary functional configuration of the controller 20. As illustrated in Fig. 2, the controller 20 includes an acquisition section 21 and an execution section 22, for example. The controller 20 communicates with each of the devices in the rider-assistance system 10.

The acquisition section 21 acquires information from each of the devices in the rider-assistance system 10, and outputs the acquired information to the execution section 22. For example, the acquisition section 21 acquires the information from the surrounding environment sensor 12 and the navigation system 13. In the present specification, the acquisition of the information can include extraction, generation, and the like of the information.

The execution section 22 executes rider-assistance operation. The rider-assistance operation is operation to assist with driving by the rider, and can include various types of operation. In particular, the execution section 22 executes lane change notification operation that is the rider-assistance operation to provide the rider with notification to instruct the rider on a lane change. The execution section 22 executes the lane change notification operation by controlling operation of the display device 11, for example. In this embodiment, as will be described below, safety of the straddle-type vehicle 1 is improved by appropriately executing the lane change notification operation.

### <Operation of Controller>

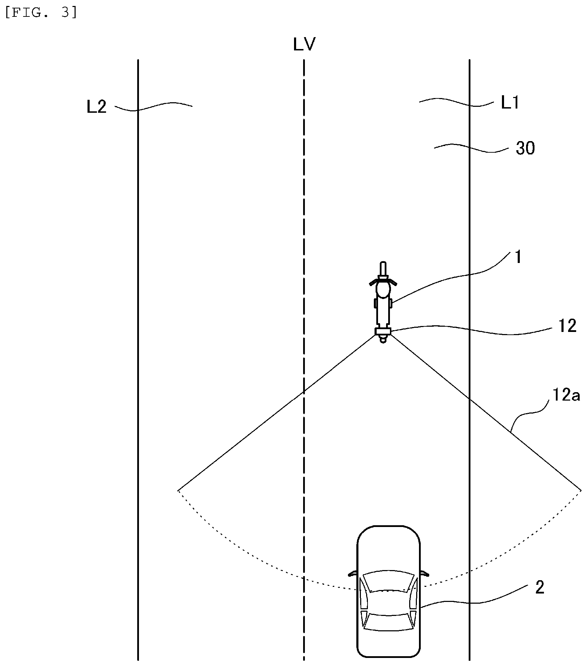

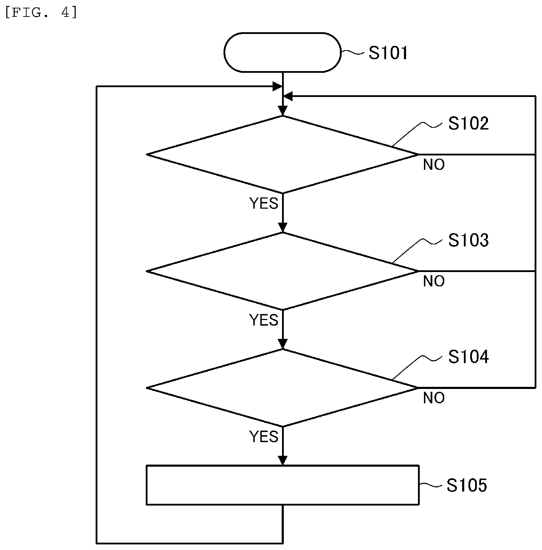

A description will be made on operation of the controller 20 according to the embodiment of the invention with reference to Fig. 3 and Fig. 4.

As described above, the execution section 22 of the controller 20 executes the lane change notification operation that is the rider-assistance operation to provide the rider with the notification to instruct the rider on the lane change. For example, the lane change notification operation is operation to instruct (in other words, recommend or suggest) the rider on the lane change by display. In this case, the lane change notification operation is executed by using the display device 11, for example. However, as will be described below, the lane change notification operation is not limited to such an example.

In particular, the execution section 22 executes the lane change notification operation on the basis of positional relationship information between the straddle-type vehicle 1 and a rear vehicle. The rear vehicle is a vehicle that is located behind the straddle-type vehicle 1. More specifically, the rear vehicle is a vehicle that is located directly behind the straddle-type vehicle 1 and travels in the same lane as the straddle-type vehicle 1.

The above positional relationship information is acquired by the acquisition section 21. For example, the acquisition section 21 acquires the above positional relationship information on the basis of the surrounding environment information that is detected by the surrounding environment sensor 12. The above positional relationship information can include information on a relative position, a relative distance, a relative speed, relative acceleration, relative jerk, or a passing time difference of a rear vehicle 2 to the straddle-type vehicle 1, for example. The above positional relationship information may be information on another physical quantity that can substantially be converted to one of these types of the information.

Fig. 3 is a view illustrating a situation where the rear vehicle 2 as the vehicle that is located behind the straddle-type vehicle 1 is detected. In an example illustrated in Fig. 3, the straddle-type vehicle 1 travels on a road 30. The road 30 includes a right lane L1 and a left lane L2. The lane L1 and the lane L2 are adjacent to each other across a lane boundary LV. The straddle-type vehicle 1 travels in the right lane L1. The lane L1 corresponds to an overtaking lane (more specifically, a lane provided to overtake a slow vehicle). At the position behind the straddle-type vehicle 1, the rear vehicle 2 travels in the right lane L1. That is, the rear vehicle 2 is located behind the straddle-type vehicle 1. In the example illustrated in Fig. 3, the rear vehicle 2 is a four-wheeled automobile. However, the rear vehicle 2 may be a vehicle other than the four-wheeled automobile (for example, a heavy vehicle, a straddle-type vehicle, or the like).

As illustrated in Fig. 3, a detection range 12a of the surrounding environment sensor 12 radially expands to the rear from the rear portion of the straddle-type vehicle 1. In the example illustrated in Fig. 3, the rear vehicle 2 is located within the detection range 12a of the surrounding environment sensor 12. Accordingly, the acquisition section 21 can acquire the positional relationship information between the straddle-type vehicle 1 and the rear vehicle 2 on the basis of the surrounding environment information that is detected by the surrounding environment sensor 12.

Fig. 4 is a flowchart illustrating an example of a processing procedure that is executed by the controller 20. Step S101 in Fig. 4 corresponds to initiation of a control flow illustrated in Fig. 4.

When the control flow illustrated in Fig. 4 is initiated, in step S102, the execution section 22 determines whether the positional relationship information between the straddle-type vehicle 1 and the rear vehicle 2 satisfies an execution condition of the lane change notification operation.

The execution condition of the lane change notification operation is a condition to determine whether to execute the lane change notification operation. If the execution condition of the lane change notification operation is not satisfied, the lane change notification operation is not executed.

An example of the execution condition of the lane change notification operation is that the above positional relationship information is information indicating that an absolute value of the relative speed of the rear vehicle 2 to the straddle-type vehicle 1 is lower than a reference speed. The reference speed is a speed near 0 km/h, for example. In the case where the absolute value of the above relative speed is lower than the reference speed, the rear vehicle 2 travels while keeping a substantially constant inter-vehicle distance from the straddle-type vehicle 1. In such a case, from a perspective of improving safety, the rider of the straddle-type vehicle 1 preferably changes the lane and allows the rear vehicle 2 to overtake the straddle-type vehicle 1.

As the execution condition of the lane change notification operation, another condition may be added to the condition in the above example.

For example, the execution condition of the lane change notification operation may be a condition that the above positional relationship information is information indicating that the passing time difference is shorter than a reference time, in addition to the information indicating that the absolute value of the relative speed of the rear vehicle 2 to the straddle-type vehicle 1 is lower than the reference speed. The passing time difference is a time spent by the rear vehicle 2 to pass the current location of the straddle-type vehicle 1 from a current time point. For example, the reference time is a time that is short enough to determine that a need for the rear vehicle 2 to overtake the straddle-type vehicle 1 is high. In the case where the absolute value of the above relative speed is lower than the reference speed and the passing time difference is shorter than the reference time, the rear vehicle 2, in a state of being close to the straddle-type vehicle 1 to some extent, travels while keeping the substantially constant inter-vehicle distance from the straddle-type vehicle 1. In such a case, a need for improving the safety by allowing the rear vehicle 2 to overtake the straddle-type vehicle 1 is particularly high.

For example, the execution condition of the lane change notification operation may be a condition that the above positional relationship information is information indicating that the inter-vehicle distance between the straddle-type vehicle 1 and the rear vehicle 2 is shorter than a reference distance, in addition to the information indicating that the absolute value of the relative speed of the rear vehicle 2 to the straddle-type vehicle 1 is lower than the reference speed. For example, the reference distance is a distance that is short enough to determine that the need for the rear vehicle 2 to overtake the straddle-type vehicle 1 is high. The reference distance may be changed according to a speed of the straddle-type vehicle 1. For example, the reference distance becomes shorter as the speed of the straddle-type vehicle 1 is reduced. In the case where the absolute value of the above relative speed is lower than the reference speed and the inter-vehicle distance is shorter than the reference distance, the rear vehicle 2, in the state of being close to the straddle-type vehicle 1 to some extent, travels while keeping the substantially constant inter-vehicle distance from the straddle-type vehicle 1. In such a case, the need for improving the safety by allowing the rear vehicle 2 to overtake the straddle-type vehicle 1 is particularly high.

The above description has been made on the example in which the execution condition of the lane change notification operation at least includes the condition that the absolute value of the relative speed of the rear vehicle 2 to the straddle-type vehicle 1 is lower than the reference speed. However, the execution condition of the lane change notification operation is not limited to the above example.

For example, the execution condition of the lane change notification operation may be a condition that the above positional relationship information is information indicating that a collision possibility between the straddle-type vehicle 1 and the rear vehicle 2 is higher than a reference possibility. For example, the execution section 22 can determine that the collision possibility is increased as the relative speed of the rear vehicle 2 to the straddle-type vehicle 1 is increased. In addition, for example, the execution section 22 can determine that the collision possibility is increased as the passing time difference or the inter-vehicle distance between the straddle-type vehicle 1 and the rear vehicle 2 is reduced. The above reference possibility is set such that it is possible to appropriately determine that a need for avoiding a collision between the straddle-type vehicle 1 and the rear vehicle 2 is high. In the case where the collision possibility between the straddle-type vehicle 1 and the rear vehicle 2 is higher than the reference possibility, from the perspective of improving the safety, the rider of the straddle-type vehicle 1 preferably changes the lane and allows the rear vehicle 2 to overtake the straddle-type vehicle 1.

If it is determined that the positional relationship information between the straddle-type vehicle 1 and the rear vehicle 2 satisfies the execution condition of the lane change notification operation (step S102/YES), the processing proceeds to step S103. On the other hand, if it is determined that the positional relationship information between the straddle-type vehicle 1 and the rear vehicle 2 does not satisfy the execution condition of the lane change notification operation (step S102/NO), the processing in step S102 is repeated.

If it is determined YES in step S102, in step S103, the execution section 22 determines whether lane information of the road 30, on which the straddle-type vehicle 1 travels, is information indicating that the road 30 includes the plural lanes.

The lane information is information on the lanes of the road 30. For example, the lane information includes information on the number of the lanes included in the road 30, which of the lanes included in the road 30 is the overtaking lane, which of the lanes included in the road 30 the straddle-type vehicle 1 travels in, and the like. The acquisition section 21 generates the lane information on the basis of the information that is acquired from the navigation system 13, for example.

If it is determined that the lane information is the information indicating that the road 30 includes the plural lanes (step S103/YES), the processing proceeds to step S104. On the other hand, if it is determined that the lane information is not the information indicating that the road 30 includes the plural lanes (step S103/NO), the processing returns to step S102.

For example, in the example illustrated in Fig. 3, the road 30 includes the two lanes of the lane L1 and the lane L2. Thus, it is determined YES in step S103.

If it is determined YES in step S103, in step S104, the execution section 22 determines whether the lane information of the road 30, on which the straddle-type vehicle 1 travels, is information indicating that the straddle-type vehicle 1 travels in the overtaking lane.

If it is determined that the lane information is the information indicating that the straddle-type vehicle 1 travels in the overtaking lane (step S104/YES), the processing proceeds to step S105. On the other hand, if it is determined that the lane information is not the information indicating that the straddle-type vehicle 1 travels in the overtaking lane (step S104/NO), the processing returns to step S102.

For example, in the example illustrated in Fig. 3, the lane L1, in which the straddle-type vehicle 1 travels, is the overtaking lane. Thus, it is determined YES in step S104.

If it is determined YES in step S104, in step S105, the execution section 22 executes the lane change notification operation, and the processing returns to step S102. The lane change notification operation may be executed immediately after it is determined YES in step S104, or may be executed after a lapse of a predetermined time.

As described above, the lane change notification operation is the operation to instruct the rider on the lane change by the display, for example. In this case, for example, characters, a figure, a symbol, or a combination of these to instruct the lane change is displayed for the rider. The lane change notification operation by the display is executed by using the display device 11 that is mounted to the straddle-type vehicle 1, for example. However, the lane change notification operation by the display may be executed by using a display device that is mounted to an article (such as a helmet) worn by the rider.

In particular, in the lane change notification operation by the display, the execution section 22 preferably notifies the rider of a direction of the lane as a lane change destination with respect to the lane in which the straddle-type vehicle 1 currently travels. For example, in the example illustrated in Fig. 3, the straddle-type vehicle 1 changes the lane to the left lane L2. Thus, in the lane change notification operation by the display, it is preferred to display, for the rider, characters, a figure, a symbol, or a combination of these to instruct the lane change to the left. In this way, the rider is instructed to change the lane to the low-speed lane by the lane change notification operation.

The above description has been made on the example in which the lane change notification operation is the operation to instruct the rider on the lane change by the display. However, the lane change notification operation is not limited to the operation by the display.

For example, the lane change notification operation may be operation to instruct the rider on the lane change by vibration. An example of such operation is operation to vibrate the handlebar of the straddle-type vehicle 1. In this case, a vibration generator is provided to the handlebar, and the execution section 22 instructs the rider on the lane change by vibrating the vibration generator. Since the handlebar is a member that is operated by the rider at the time of the lane change, the lane change is instructed by vibrating the handlebar.

In particular, in the lane change notification operation by the vibration, the execution section 22 preferably vibrates a portion of the handlebar on a side of the lane as the lane change destination. For example, in the example illustrated in Fig. 3, the straddle-type vehicle 1 changes the lane to the lane L2. Thus, in the lane change notification operation by the vibration, the execution section 22 preferably vibrates a left portion of the handlebar. In this way, the rider is instructed to change the lane to the low-speed lane by the lane change notification operation. Here, in the lane change notification operation by the vibration, the execution section 22 may vibrate the rider's glove instead of the handlebar.

For example, the lane change notification operation may be operation to instruct the rider on the lane change by sound. In this case, for example, voice that instructs the lane change is output to the rider. The lane change notification operation by the sound is executed by using a voice output device that is mounted to the straddle-type vehicle 1, for example. However, the lane change notification operation by the voice may be executed by using a voice output device that is mounted to the article (such as the helmet) worn by the rider.

In particular, in the lane change notification operation by the sound, the execution section 22 preferably notifies the rider of the direction of the lane as the lane change destination with respect to the lane in which the straddle-type vehicle 1 currently travels. For example, in the example illustrated in Fig. 3, the straddle-type vehicle 1 changes the lane to the left lane L2. Thus, in the lane change notification operation by the sound, it is preferred to output, to the rider, the voice that instructs the lane change to the left. In this way, the rider is instructed to change the lane to the low-speed lane by the lane change notification operation.

Here, the lane change notification operation may be operation that combines some or all of the lane change notification operation by the display, the lane change notification operation by the vibration, and the lane change notification operation by the sound.

As it has been described so far, the execution section 22 of the controller 20 executes the lane change notification operation on the basis of the positional relationship information between the straddle-type vehicle 1 and the rear vehicle 2. In this way, it is possible to appropriately instruct the rider on the lane change according to a traffic condition behind the straddle-type vehicle 1. Therefore, it is possible to improve the safety of the straddle-type vehicle 1.

The above description has been made on the example of the processing that is executed by the controller 20 with reference to Fig. 4. However, the processing that is executed by the controller 20 may be processing in which the above processing example is modified.

For example, in the above processing example, the execution section 22 executes the lane change notification operation on the basis of the lane information in addition to the positional relationship information. However, the execution section 22 may execute the lane change notification operation not on the basis of the lane information. For example, in the control flow illustrated in Fig. 4, both of the processing in step S103 and the processing in step S104 may be omitted. Alternatively, in the control flow illustrated in Fig. 4, only one of the processing in step S103 and the processing in step S104 may be omitted.

For example, the execution section 22 may execute the lane change notification operation only when the lane information is information indicating that vehicle density of the lane as the lane change destination is lower than reference density. The vehicle density may be defined as a reciprocal of an inter-vehicle distance between two vehicles that travel near (for example, diagonally in front of) the straddle-type vehicle 1 in the lane as the lane change destination, may be defined as a reciprocal of an average value of plural inter-vehicle distances that is acquired by selecting plural pairs of two vehicles from three or more vehicles traveling near (for example, diagonally in front of) the straddle-type vehicle 1 in the lane as the lane change destination by changing combinations, or may be defined as the number of vehicles that exist within a predetermined distance range in the lane as the lane change destination. Such operation prevents the lane change notification operation from being executed when there is no sufficient space for the straddle-type vehicle 1 to safely enter the lane as the lane change destination.

In addition, for example, in the above processing example, the description has been made on the example in which the lane information of the road 30 is generated on the basis of the information that is acquired from the navigation system 13. However, the lane information may be generated on the basis of information other than the information that is acquired from the navigation system 13. For example, the lane information may be generated on the basis of information that is acquired from the surrounding environment sensor (for example, the surrounding environment sensor 12 in Fig. 1) that is mounted to the straddle-type vehicle 1. Such a surrounding environment sensor may detect surrounding environment information of a lateral side of the straddle-type vehicle 1. In addition, for example, the lane information may be generated on the basis of the surrounding environment information that is acquired via the wireless communication with the other vehicle or the infrastructure facility.

For example, in the above processing example, the execution section 22 executes the lane change notification operation on the basis of the positional relationship information between the straddle-type vehicle 1 and the vehicle that is located directly behind the straddle-type vehicle 1 and travels in the same lane as the straddle-type vehicle 1. However, the execution section 22 may execute the lane change notification operation on the basis of positional relationship information between the straddle-type vehicle 1 and a vehicle that travels a few cars behind the straddle-type vehicle 1 in the same lane as the straddle-type vehicle 1. In a situation where group travel is made in which the straddle-type vehicle 1 and other straddle-type vehicles travel in a group, such operation is especially useful.

### <Effects of Controller>

A description will be made on effects of the controller 20 according to the embodiment of the invention.

The controller 20 includes: the acquisition section 21 that acquires the positional relationship information between the straddle-type vehicle 1 and the rear vehicle 2 that is the vehicle located behind the straddle-type vehicle 1; and the execution section 22 that executes the rider-assistance operation to assist with driving by the rider. The execution section 22 executes the lane change notification operation to notify the rider of the instruction on the lane change on the basis of the positional relationship information. In this way, it is possible to appropriately instruct the rider on the lane change according to the traffic condition behind the straddle-type vehicle 1. Therefore, it is possible to improve the safety of the straddle-type vehicle 1.

Preferably, in the controller 20, the execution section 22 executes the lane change notification operation in the case where the positional relationship information is the information indicating that the absolute value of the relative speed of the rear vehicle 2 to the straddle-type vehicle 1 is lower than the reference speed. In this way, in the case where the rear vehicle 2 travels while keeping the substantially constant inter-vehicle distance from the straddle-type vehicle 1, the rider can be instructed on the lane change. Therefore, it is possible to appropriately improve the safety of the straddle-type vehicle.

Preferably, in the controller 20, the execution section 22 executes the lane change notification operation in the case where, in addition to that the absolute value of the relative speed of the rear vehicle 2 to the straddle-type vehicle 1 is lower than the reference speed, the positional relationship information is information indicating that the passing time difference as the time for the rear vehicle 2 to pass the current position of the straddle-type vehicle 1 from the current time point is shorter than the reference time. In this way, in the case where the rear vehicle 2, in the state of being close to the straddle-type vehicle 1 to some extent, travels while keeping the substantially constant inter-vehicle distance from the straddle-type vehicle 1, the rider can be instructed on the lane change. Therefore, it is possible to appropriately improve the safety of the straddle-type vehicle.

Preferably, in the controller 20, the execution section 22 executes the lane change notification operation in the case where, in addition to that the absolute value of the relative speed of the rear vehicle 2 to the straddle-type vehicle 1 is lower than the reference speed, the positional relationship information is the information indicating that the inter-vehicle distance between the straddle-type vehicle 1 and the rear vehicle 2 is shorter than the reference distance. In this way, in the case where the rear vehicle 2, in the state of being close to the straddle-type vehicle 1 to some extent, travels while keeping the substantially constant inter-vehicle distance from the straddle-type vehicle 1, the rider can be instructed on the lane change. Therefore, it is possible to appropriately improve the safety of the straddle-type vehicle 1.

Preferably, in the controller 20, the execution section 22 executes the lane change notification operation in the case where the positional relationship information is the information indicating that the collision possibility between the straddle-type vehicle 1 and the rear vehicle 2 is higher than the reference possibility. In this way, in the case where the need for avoiding the collision between the straddle-type vehicle 1 and the rear vehicle 2 is high, the rider can be instructed on the lane change. Therefore, it is possible to appropriately improve the safety of the straddle-type vehicle 1.

Preferably, in the controller 20, the execution section 22 executes the lane change notification operation on the basis of, in addition to the positional relationship information, the lane information of the road 30 on which the straddle-type vehicle 1 travels. In this way, by taking the lane information into consideration, it is possible to instruct the rider on the lane change at the further appropriate timing. Therefore, it is possible to suppress the unnecessary execution of the lane change notification operation.

Preferably, in the controller 20, the execution section 22 executes the lane change notification operation in the case where the lane information is the information indicating that the road 30 includes plural lanes. In this way, in the case where there is the lane as the lane change destination for the straddle-type vehicle 1 (that is, the adjacent lane to the lane in which the straddle-type vehicle 1 currently travels), the rider can be instructed on the lane change. Therefore, it is possible to appropriately suppress the unnecessary execution of the lane change notification operation.

Preferably, in the controller 20, the execution section 22 executes the lane change notification operation in the case where the lane information is the information indicating that the straddle-type vehicle 1 travels in the overtaking lane. Here, in the case where the straddle-type vehicle 1 travels in the lane that is not the overtaking lane, there is a high possibility that the rear vehicle 2 does not overtake the straddle-type vehicle 1 even when the straddle-type vehicle 1 changes the lane. Thus, by executing the lane change notification operation when the lane information is the information indicating that the straddle-type vehicle 1 travels in the overtaking lane, it is possible to appropriately suppress the unnecessary execution of the lane change notification operation.

Preferably, in the controller 20, the lane change notification operation includes the operation to instruct the rider on the lane change by the display. In this way, the rider can visually recognize the instruction on the lane change. Thus, it is possible to appropriately notify the rider of the instruction on the lane change.

Preferably, in the controller 20, the lane change notification operation includes the operation to instruct the rider on the lane change by the vibration. In this way, the rider can recognize the instruction on the lane change through tactile sensation. Thus, it is possible to appropriately notify the rider of the instruction on the lane change.

Preferably, in the controller 20, the lane change notification operation includes the operation to instruct the rider on the lane change by the sound. In this way, the rider can recognize the instruction on the lane change through hearing sensation. Thus, it is possible to appropriately notify the rider of the instruction on the lane change.

The invention is not limited to the embodiment that has been described. For example, only a part of the embodiment may be implemented.

### Reference Signs List

- 1:: Straddle-type vehicle
- 2:: Rear vehicle
- 10:: Rider-assistance system
- 11:: Display device
- 12:: Surrounding environment sensor
- 12a:: Detection range
- 13:: Navigation system
- 20:: Controller
- 21:: Acquisition section
- 22:: Execution section
- 30:: Road
- L1:: Lane
- L2:: Lane
- LV:: Lane boundary

## Claims

1. A controller (20) for a rider-assistance system (10) that assists with driving by a rider of a straddle-type vehicle (1), the controller comprising:
an acquisition section (21) that acquires positional relationship information between the straddle-type vehicle (1) and a rear vehicle (2) that is a vehicle located behind the straddle-type vehicle (1); and
an execution section (22) that executes rider-assistance operation to assist with driving by the rider, wherein
the execution section (22) executes lane change notification operation on the basis of the positional relationship information, the lane change notification operation being the rider-assistance operation to notify the rider of an instruction on a lane change.

2. The controller according to claim 1, wherein
the execution section (22) executes the lane change notification operation in the case where the positional relationship information is information indicating that an absolute value of a relative speed of the rear vehicle (2) to the straddle-type vehicle (1) is lower than a reference speed.

3. The controller according to claim 2, wherein
the execution section (22) executes the lane change notification operation in the case where, in addition to that the absolute value of the relative speed is lower than the reference speed, the positional relationship information is information indicating that a passing time difference as a time for the rear vehicle (2) to pass a current position of the straddle-type vehicle (1) from a current time point is shorter than a reference time.

4. The controller according to claim 2, wherein
the execution section (22) executes the lane change notification operation in the case where, in addition to that the absolute value of the relative speed is lower than the reference speed, the positional relationship information is information indicating that an inter-vehicle distance between the straddle-type vehicle (1) and the rear vehicle (2) is shorter than a reference distance.

5. The controller according to claim 1, wherein
the execution section (22) executes the lane change notification operation in the case where the positional relationship information is information indicating that a collision possibility between the straddle-type vehicle (1) and the rear vehicle (2) is higher than a reference possibility.

6. The controller according to claim 1, wherein
the execution section (22) executes the lane change notification operation on the basis of, in addition to the positional relationship information, lane information of a road (30) on which the straddle-type vehicle (1) travels.

7. The controller according to claim 6, wherein
the execution section (22) executes the lane change notification operation in the case where the lane information is information indicating that the road (30) includes plural lanes (L1, L2).

8. The controller according to claim 6, wherein
the execution section (22) executes the lane change notification operation in the case where the lane information is information indicating that the straddle-type vehicle (1) travels in an overtaking lane (L1).

9. The controller according to claim 6, wherein
the execution section (22) executes the lane change notification operation in the case where the lane information is information indicating that vehicle density of the lane (L2) as a lane change destination is lower than reference density.

10. The controller according to claim 1, wherein
the lane change notification operation includes operation to instruct the rider on the lane change by display.

11. The controller according to claim 1, wherein
the lane change notification operation includes operation to instruct the rider on the lane change by vibration.

12. The controller according to claim 1, wherein
the lane change notification operation includes operation to instruct the rider on the lane change by sound.

13. The controller according to any one of claims 1 to 12, wherein
the lane change notification operation includes operation to notify the rider of a direction of a lane (L2) as a lane change destination with respect to a lane (L1) in which the straddle-type vehicle (1) currently travels.

14. A control method for a rider-assistance system (10) that assists with driving by a rider of a straddle-type vehicle (1), the control method comprising:
acquiring positional relationship information between the straddle-type vehicle (1) and a rear vehicle (2) that is a vehicle located behind the straddle-type vehicle (1) by an acquisition section (21) of a controller (20); and
executing rider-assistance operation to assist with driving by the rider by an execution section (22) of the controller (20), wherein
the execution section (22) executes lane change notification operation on the basis of the positional relationship information, the lane change notification operation being the rider-assistance operation to notify the rider of an instruction on a lane change.
